# EUROPÄISCHE PATENTSCHRIFT

(11) **EP 3 538 499 B1**
(45) Veröffentlichungstag und Bekanntmachung des Hinweises auf die Patenterteilung: **09.07.2025**
(21) Anmeldenummer: 17804825.2
(22) Anmeldetag: 07.11.2017
(51) Int. Cl.: C04B 22/00, C04B 28/02, C04B 20/02, C04B 103/14, C04B 103/12

(54) **ERHÄRTUNGSBESCHLEUNIGER**
HARDENING ACCELERATOR
ACCÉLÉRATEUR DE DURCISSEMENT

(30) Priorität: 09.11.2016 EP 16197996
(43) Veröffentlichungstag der Anmeldung: 18.09.2019
(73) Patentinhaber: Sika Technology AG, 6340 Baar (CH)
(72) Erfinder: MÜLLER, Thomas, 69207 Sandhausen (DE); HELLER, Thomas, 74909 Meckesheim (DE)
(74) Vertreter: Sika Patent Attorneys
(86) Internationale Anmeldenummer: PCT/EP2017/078502
(87) Internationale Veröffentlichungsnummer: WO 2018/087099

(56) Entgegenhaltungen:
- EP-A1- 1 690 841
- EP-A1- 2 145 868
- WO-A1-2009/030758
- JP-A- 2006 111 485
- JP-A- 2006 298 732
- JP-A- H1 160 298
- US-A- 2 987 407
- US-A- 5 709 743
- US-A1- 2012 090 508
- US-B1- 6 402 831

## Beschreibung

### Technisches Gebiet

Die Erfindung betrifft ein Verfahren zur Herstellung eines Abbinde- und/oder Erhärtungsbeschleunigers für mineralische Bindemittel sowie einen Abbinde- und/oder Erhärtungsbeschleuniger. Des Weiteren bezieht sich die Erfindung auf ein Verfahren zur Beschleunigung des Abbindens und/oder Erhärtens eines mineralischen Bindemittels und die Verwendung eines Abbinde- und/oder Erhärtungsbeschleunigers zur Beschleunigung des Abbindens und/oder Erhärtens eines mineralischen Bindemittels.

### Stand der Technik

Abbinde- oder Erhärtungsbeschleuniger werden in mineralischen Bindemitteln eingesetzt um das Erstarren bzw. Erhärten von Bindemittelzusammensetzungen nach dem Anmachen mit Wasser zu beschleunigen.

Dies kann z.B. notwendig sein, um ein Betonieren bei tiefen Temperaturen zu ermöglichen oder um die Frühfestigkeiten von Mörtel- oder Betonzusammensetzungen zu erhöhen. Hohe Frühfestigkeiten von Mörtel- oder Betonzusammensetzungen erlauben insbesondere ein schnelleres Ausschalen und ein früheres Aufbringen von Belastungen oder Vorspannungen bei mörtel- oder betonbasierten Bauten. So kann durch eine Steigerung der Frühdruckfestigkeit z.B. die Steigleistung bei Gleitschalungen erhöht oder die Endbearbeitung von vertikalen Sichtbetonflächen aufgrund der früheren Ausschalung vorgezogen werden. Weiterhin kann durch Einsatz von Beschleunigern eine erforderliche Wärmebehandlung des Betons zur Steigerung der Frühfestigkeiten verringert werden bzw. entfallen.

Seit langem gebräuchlich sind beispielsweise Erhärtungsbeschleuniger basierend auf Aminoalkoholen, Halogeniden, Pseudohalogeniden, Nitriten, Nitraten, Aluminiumsalzen oder Carbonaten (z.B. Lithiumcarbonat).

Die JP 2006-111485 (Tokuyama Corp) offenbart einen Abbindebeschleuniger für Zement, welcher Calciumcarbonat mit einer durchschnittlichen Teilchengröße von weniger als 0.7 µm umfasst. Gemäss JP 2006-111485 kann Calciumcarbonat mit einer solchen Partikelgröße erhalten werden entweder durch Pulverisieren eines im Wesentlichen aus Calciumcarbonat bestehenden Minerals in einer Mühle oder durch Umsetzung eines Calciumsalzes wie gelöschter Kalk mit Kohlensäuregas.

Neuere und besonders effektive Beschleunigerzusammensetzungen basieren unter anderem auf synthetischen Calciumsilikat-Hydraten als beschleunigende Substanzen. Die WO 2010/026155 A1 (Construction Research & Technology GmbH) beschreibt in diesem Zusammenhang beispielsweise eine Beschleunigerzusammensetzung, welche durch Fällungsreaktion einer Calciumverbindung und einer Siliciumverbindung in Anwesenheit eines wasserlöslichen Kammpolymers hergestellt wird. Die WO 2013/083627 A1 (Sika Technology AG) beschreibt ein ähnliches Verfahren, bei welchem die Umsetzung einer Calciumverbindung mit einer Siliciumverbindung aber unter Zugabe einer sauren Verbindung mit einem Molekulargewicht von höchstens 200 g/mol erfolgt.

Derartige Beschleunigerzusammensetzungen sind in gewissen Bindemitteln zwar durchaus wirksam, erfordern aber relativ aufwändige und teure Herstellungsverfahren. Zudem enthalten die in der Praxis eingesetzten Beschleuniger aufgrund der Herstellungsprozesse meist Nitrate, was eine Anwendung im Bereich der Spannbetone verunmöglicht und im Bereich von stahlbewehrten Betonen erschwert.

Es besteht daher nach wie vor Bedarf nach verbesserten Beschleunigern für mineralische Bindemittel und effizienteren Herstellverfahren, welche die vorstehend genannten Nachteile nicht aufweisen.

### Darstellung der Erfindung

Aufgabe der vorliegenden Erfindung ist es daher, verbesserte beschleunigende Zusätze sowie Verfahren zu deren Herstellung zur Verfügung zu stellen. Die beschleunigenden Zusätze sollen insbesondere für Anwendungen im Bereich der Spannbetone und des stahlbewehrten Betons geeignet sein. Im Besonderen sollen die Verfahren zur Herstellung der beschleunigenden Zusätze so einfach wie möglich gehalten werden und möglichst wirtschaftlich sein.

Überraschenderweise wurde gefunden, dass die erfindungsgemässe Aufgabe hinsichtlich des Herstellverfahrens durch ein Verfahren gemäss Anspruch 1 gelöst werden kann.

Das erfindungsgemässe Verfahren zur Herstellung eines Abbinde- und/oder Erhärtungsbeschleunigers für mineralische Bindemittel zeichnet sich dadurch aus, dass ein mineralischer Feststoff in einem flüssigen Medium einer Mahlung unterzogen wird, wobei der mineralische Feststoff einen Zement umfasst und wobei der mineralische Feststoff Kalkstein und/oder Kalksteinmehl umfasst.

Wie es sich gezeigt hat, können durch das erfindungsgemässe Verfahren enorm feine Partikel aus dem mineralischen Feststoff erzeugt werden, welche sodann als überraschend effektive Abbinde- und Erhärtungsbeschleuniger verwendbar sind. Das Verfahren an sich ist mit relativ geringem Aufwand beispielsweise auf kommerziell erhältlichen Rührwerksmühlen, z.B. Perlmühlen, durchführbar. Auf aufwändige chemische Synthesereaktionen kann dabei verzichtet werden.

Dies kommt überraschend, da mit mineralischen Feststoffen, welche lediglich in trockenem Zustand bzw. in Abwesenheit eines flüssigen Mediums gemahlen wurden, weitaus geringere Festigkeitssteigerungen in mineralischen Bindemitteln erzielt wurden. Ohne an eine Theorie gebunden zu sein, wird vermutet, dass bei der erfindungsgemässen Mahlung in flüssigem Medium im Gegensatz zur Trockenmahlung die Bildung von Primärpartikelagglomeraten reduziert werden kann, da die Primärpartikel von Flüssigkeitsmolekülen umhüllt werden. Daher können die Primärpartikel durch erneuten Energieeintrag weiter zerkleinert werden bis auf Partikelgrößen von klar unter 100 nm. Somit können sie als Keime für das Kristallwachstum dienen, was für die Hydratation von mineralischen Bindemitteln förderlich ist.

Des Weiteren können die Druckfestigkeiten von mineralischen Bindemittelzusammensetzungen mit den erfindungsgemässen Beschleunigern, insbesondere 4 - 8 Stunden oder 6 - 8 Stunden nach dem Anmachen, signifikant erhöht werden. Zudem sind die erfindungsgemässen Erhärtungsbeschleuniger in Bezug auf das Kosten/Leistungsverhältnis äusserst interessant. Weiter wurde gefunden, dass die erfindungsgemässen Erhärtungsbeschleuniger bezüglich unerwünschtem Ansteifverhalten von mineralischen Bindemitteln oder mineralischen Bindemittelzusammensetzungen, insbesondere zementösen Systemen, deutlich weniger problematisch sind als viele bekannte Beschleuniger.

Im Vergleich zu nicht beschleunigten mineralischen Bindemittelzusammensetzungen erlauben die erfindungsgemässen Beschleuniger in der Praxis beispielsweise ein deutlich früheres Ausschalen oder Belasten von hergestellten Fertigteilen.

Des Weiteren wurde festgestellt, dass die erfindungsgemässen Abbinde- und/oder Erhärtungsbeschleuniger in weiten Bereichen unabhängig von den mineralischen Bindemitteln in welche sie eingesetzt werden, wirksam sind.

Die erfindungsgemässen Abbinde- und/oder Erhärtungsbeschleuniger sind zudem mit herkömmlichen Erhärtungsbeschleunigern, beispielsweise Substanzen wie Chloride, Nitrate, Nitrite, Thiocyanate und/oder Alkanolamine, kompatibel. Entsprechend können die erfindungsgemässen Erhärtungsbeschleuniger mit solchen Substanzen gut kombiniert werden. Dadurch kann für spezielle Anwendungen bei Bedarf die beschleunigende Wirkung gesteigert und/oder bestmöglich an spezielle Erfordernisse angepasst werden. Dies kann z.B. der Fall sein, wenn die Erhärtungsbeschleuniger ausserhalb der Bereiche Spannbeton und stahlbewehrter Beton eingesetzt werden.

Es hat sich überraschenderweise jedoch auch gezeigt, dass bei einem Verzicht auf solche für gewisse Anwendungen problematische Substanzen, wie Chloride, Nitrate, Nitrite, Thiocyanate und/oder Alkanolamine, dennoch für die meisten Anwendungen ausgezeichnete Beschleunigungswirkungen erzielt werden können, insbesondere in Spannbetonen und stahlbewehrtem Beton.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

In einem ersten Aspekt betrifft die Erfindung ein Verfahren zur Herstellung eines Abbinde- und/oder Erhärtungsbeschleunigers für mineralische Bindemittel, wobei ein mineralischer Feststoff in einem flüssigen Medium einer Mahlung unterzogen wird, wobei der mineralische Feststoff einen Zement, insbesondere einen Portlandzement, Calciumaluminatzement und/oder Calciumsulfoaluminatzement, umfasst und wobei der mineralische Feststoff Kalkstein und/oder Kalksteinmehl umfasst.

Mit dem Begriff "Mahlen" oder "Mahlung" wird insbesondere ein Verfahren verstanden, bei welchem eine durchschnittlich Partikelgrösse eines Feststoffs oder eines Gemischs von verschiedenen Feststoffen reduziert wird. Dies erfolgt typischerweise in einer Mühle, z.B. in einer Rührwerksmühle. Das Mahlen des Feststoffs erfolgt insbesondere bei Temperaturen unter 300°C, bevorzugt unter 150°C, weiter bevorzugt unter 110°C. Besonders bevorzugte Temperaturen liegen zwischen 10 - 110°C, insbesondere 20 - 50°C.

Ein "mineralischer Feststoff' ist im vorliegenden Zusammenhang insbesondere ein anorganischer Stoff für Bauzwecke, beispielsweise ein Bestandteil von Zement-, Mörtel- und/oder Betonzusammensetzungen. Der Feststoff umfasst einen Zement, und Kalkstein und/oder Kalksteinmehl. Der Feststoff kann grundsätzlich in grober Form, z.B. als (ungemahlener) Klinker, und/oder bereits teilweise vermahlen vorliegen.

Der mineralische Feststoff kann als Mischung mit weiteren festen und/oder flüssigen Substanzen vorliegen.

Der mineralische Feststoff liegt insbesondere in Partikelform vor. Der Begriff "Partikel" bzw. "Partikelform" bezeichnet vorliegend im Besonderen Feststoffe mit einer durchschnittlichen Partikelgrösse von weniger als 1'000 µm, insbesondere weniger als 500 µm, bevorzugt weniger als 100 µm. Die Partikelgrösse, deren Verteilung oder die durchschnittliche Partikelgrösse können insbesondere durch Laserbeugung, bevorzugt entsprechend Norm ISO 13320:2009, bestimmt werden. Insbesondere wird hierfür ein Gerät Mastersizer 2000 mit einer Dispergiereinheit Hydro 2000G und die Software Mastersizer 2000 der Firma Malvern Instruments GmbH (Deutschland) verwendet. Als Messmedium ist z.B. Isopropanol geeignet. Die durchschnittliche Partikelgrösse entspricht vorliegend insbesondere dem D50-Wert (50% der Partikel sind kleiner als der angegebene Wert, 50% entsprechend grösser).

Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein. Eine "mineralische Bindemittelzusammensetzung" ist entsprechend eine Zusammensetzung enthaltend mindestens ein mineralisches Bindemittel.

Unter einem "zementösen Bindemittel" oder einer "zementösen Bindemittelzusammensetzung" wird vorliegend insbesondere ein Bindemittel oder eine Bindemittelzusammensetzung mit einem Anteil von wenigstens 5 Gew.-%, insbesondere wenigstens 20 Gew.-%, bevorzugt wenigstens 35 Gew.-%, im Speziellen wenigstens 65 Gew.-%, Zementklinker verstanden. Der Zementklinker ist bevorzugt ein Portlandzementklinker, Calciumaluminatzement (Tonerdenschmelzzementklinker) und/oder Calciumsulfoaluminatzementklinker. Mit Zementklinker ist im vorliegenden Zusammenhang insbesondere gemahlener Zementklinker gemeint.

Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von ≥ 35 Gew.-%.

Insbesondere ist der Zement vom Typ CEM I, II, III, IV oder V, bevorzugt Zement vom Typ CEM I (gemäss Norm EN 197-1).

Gemäss einer weiteren bevorzugten Ausführungsform enthält das mineralische Bindemittel Calciumaluminatzement (Tonerdenschmelzzement) und/oder Calciumsulfoaluminatzement oder das mineralische Bindemittel besteht daraus. Calciumaluminatzement weist als Hauptbestandteil Monocalciumaluminat auf. Der reaktive Hauptbestandteil von Calciumsulfoaluminatzement basiert auf dem Mineral Ye'elimit.

Es kann dabei auch vorteilhaft sein, wenn das mineralische Bindemittel unterschiedliche Zemente enthält. Z.B. Zement vom Typ CEM I, II, III, IV und/oder V in Kombination mit Calciumaluminatzement und/oder Calciumsulfoaluminatzement.

Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel wenigstens 95 Gew.-% aus hydraulischem Bindemittel, insbesondere aus Zementklinker.

Es kann aber auch vorteilhaft sein, wenn die Bindemittelzusammensetzung zusätzlich oder anstelle eines hydraulischen Bindemittels andere Bindemittel enthält. Dies sind insbesondere latent hydraulische Bindemittel und/oder puzzolanische Bindemittel. Geeignete latenthydraulische und/oder puzzolanische Bindemittel sind z.B. Schlacke, Flugasche, Silicastaub, gebrannter Ölschiefer und/oder gebrannter Ton (z.B. Metakaolin). Ebenso kann die Bindemittelzusammensetzung inerte Stoffe wie z.B. Kalksteinmehl, Quarzmehl und/oder Pigmente enthalten. In einer vorteilhaften Ausführungsform enthält das mineralische Bindemittel 5 - 95 Gew.-%, insbesondere 5 - 65 Gew.-%, im Speziellen 15 - 35 Gew.-%, latenthydraulische und/oder puzzolanische Bindemittel.

Der Abbinde- und/oder Erhärtungsbeschleuniger wirkt insbesondere zumindest erhärtungsbeschleunigend. Ein solcher Beschleuniger kann auch als Erhärtungsbeschleuniger bezeichnet werden.

Der Begriff "Erhärtungsbeschleuniger" steht insbesondere für eine Substanz, welche, falls einem mineralischen Bindemittel zugesetzt und verglichen mit einer Nullprobe ohne zugesetzte Substanz bzw. ohne Erhärtungsbeschleuniger, zu einer Erhöhung der Druckfestigkeit des mineralischen Bindemittels nach einem definierten Zeitpunkt nach dem Anmachen führt. Dies insbesondere nach 2 - 24 h, bevorzugt nach 2 - 12 h, im Speziellen nach 2 - 8 h, im Besonderen nach 4 - 8 h. Die Bestimmung der Druckfestigkeiten erfolgt insbesondere nach Norm EN 12390-3:2009-07.

Der mineralische Feststoff ist bevorzugt im flüssigen Medium im Wesentlichen unlöslich. Damit ist gemeint, dass bei einer Temperatur von 25°C und einem Druck von 1 bar höchstens 1 g, insbesondere höchstens 0.5 g, bevorzugt höchstens 0.1 g des mineralischen Feststoffs pro Liter flüssigen Mediums löslich ist. Hydratationsreaktionen wie sie beispielsweise bei der Hydratation von mineralischen Bindemitteln in Wasser auftreten, werden dabei nicht als Lösungsvorgang betrachtet. Damit wird eine effektive Mahlung bewirkt, ohne dass nennenswerte Anteile des mineralischen Feststoffs dem Mahlvorgang durch Lösung entzogen werden.

Es können grundsätzlich aber auch mineralische Feststoffe verwendet werden, welche bei einer Temperatur von 25°C und einem Druck von 1 bar eine Löslichkeit im flüssigen Medium von mehr als 1 g pro Liter des Mediums aufweisen.

Auch können Mischungen aus unlöslichen Feststoffen und mineralischen Feststoffen, welche bei einer Temperatur von 25°C und einem Druck von 1 bar eine Löslichkeit im flüssigen Medium von mehr als 1 g pro Liter des Mediums aufweisen, eingesetzt werden.

Der mineralische Feststoff liegt im Besonderen vor der Mahlung in Form eines Mehls vor und/oder er weist eine durchschnittliche Partikelgrösse von 0.0001 bis 1.0 mm, bevorzugt 0.001 bis 0.50 mm, insbesondere 0.002 bis 0.063 mm auf. Wie es sich gezeigt hat, kann dadurch der Mahlvorgang besonders effizient gestaltet werden, da die Mahldauer im Vergleich zur Mahlung von grobkörnigeren Feststoffen reduziert werden kann. Zudem wird eine homogenere Partikelgrössenverteilung erreicht, was der Wirksamkeit des Abbinde- und/oder Erhärtungsbeschleunigers zu Gute kommt.

Bei speziellen Feststoffen oder für spezielle Anwendungen können aber auch andere Partikelgrössen geeignet sein.

In einer bevorzugten Ausführungsform ist der mineralische Feststoff im Wesentlichen frei von metallkorrosiven Substanzen. Insbesondere ist der mineralische Feststoff im Wesentlichen frei von Chloriden, Thiocyanaten, Nitriten und/oder Nitraten. "Im Wesentlichen frei" meint vorliegend, dass der Anteil an den genannten Substanzen bezogen auf das Gesamtgewicht des mineralischen Feststoffs kleiner als 1 Gew.-%, insbesondere kleiner als 0.5 Gew.-%, im Besonderen kleiner als 0.1 Gew.-%, ist. Dadurch sind Abbinde- und/oder Erhärtunsgebschleuniger erhältlich, welche im Besonderen Masse geeignet sind, in stahlbewehrtem Beton oder Spannbeton eingesetzt zu werden.

Für spezielle Anwendungen ist aber durchaus möglich, mineralische Feststoffe enthaltend korrosive Substanzen vorzusehen. Dies können auch im Medium lösliche und/oder flüssige Substanzen sein.

Der mineralische Feststoff umfasst einen Zement, insbesondere einen Portlandzement. Besonders umfasst der mineralische Feststoff einen Zement mit einem Zementklinkeranteil von ≥ 35 Gew.-%.

Insbesondere ist der Zement vom Typ CEM I, II, III, IV oder V, bevorzugt Zement vom Typ CEM I (gemäss Norm EN 197-1).

Gemäss einer weiteren bevorzugten Ausführungsform umfasst der Feststoff Calciumaluminatzement (Tonerdenschmelzzement) und/oder Calciumsulfoaluminatzement.

Es kann dabei auch vorteilhaft sein, wenn der Feststoff unterschiedliche Zemente enthält. Z.B. Zement vom Typ CEM I, II, III, IV und/oder V in Kombination mit Calciumaluminatzement und/oder Calciumsulfoaluminatzement.

Ein Anteil des hydraulischen Bindemittels am gesamten mineralische Feststoff beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht der mineralische Feststoff zu wenigstens 95 Gew.-% aus hydraulischem Bindemittel, insbesondere aus Zementklinker.

Es kann aber auch vorteilhaft sein, wenn der mineralische Feststoff zusätzlich oder anstelle eines hydraulischen Bindemittels andere Bindemittel enthält. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann der mineralische Feststoff inerte Stoffe wie z.B. Quarzmehl und/oder Pigmente enthalten. In einer vorteilhaften Ausführungsform enthält der mineralische Feststoff 5 - 95 Gew.-%, insbesondere 5 - 65 Gew.-%, im Speziellen 15 - 35 Gew.-%, latenthydraulische und/oder puzzolanische Bindemittel

Es können aber prinzipiell auch nicht-hydraulische Bindemittel und/oder inerte Feststoffe als mineralische Feststoffe eingesetzt werden. Beispielsweise können dies Calciumsulfat und/oder quarzitischer Sand sein.

Der mineralische Feststoff umfasst Kalkstein und/oder Kalksteinmehl. Unter Kalkstein wird vorliegend Calciumcarbonat, insbesondere der Form CaCO₃, verstanden. Im Speziellen liegt der Kalkstein in Form der Mineralien Calcit, Aragonit und/oder Vaterit vor. Kalksteinmehl ist entsprechend Kalkstein in Form eines Mehls.

Überraschenderweise hat sich gezeigt, dass bei vergleichbarer Partikelgrösse erfindungsgemäss gemahlener Kalkstein besser beschleunigt, als entsprechende aber gefällte Substanzen, z.B. gefälltes Calciumcarbonat.

Der mineralische Feststoff umfasst Zement und Kalkstein. Besonders bevorzugt besteht der mineralische Feststoff aus Zement und Kalkstein. Der Kalkstein liegt dabei im Besonderen als Kalksteinmehl vor.

Besonders bevorzugt umfasst der mineralische Feststoff 90 - 99.9 Gew-%, insbesondere 95 - 99 Gew.-%, Kalkstein, und 0.1 - 10 Gew.-%, im Besonderen 1 - 5 Gew.-%, Zement, bezogen auf das Gesamtgewicht des mineralischen Feststoffs.

Weiter kann der mineralische Feststoff ein mehrkomponentiges System, z.B. ein ternäres System, umfassend zwei unterschiedliche hydraulische Bindemittel und ein nicht-hydraulisches Bindemittel beinhalten. Ein ternäres System kann z.B. Portlandzement, Calciumaluminatzement und Calciumsulfat umfassen.

Besonders bevorzugt wird das mineralische Bindemittel während und/oder nach der Mahlung durch das flüssige Medium zumindest teilweise, insbesondere vollständig hydratisiert. Mit "Hydratisierung" ist in diesem Zusammenhang gemeint, dass das mineralische Bindemittel zumindest teilweise in einer Hydratationsreaktion zu festen Hydraten oder Hydratphasen reagiert. Eine blosse Anlagerung oder Umhüllung von Molekülen des flüssigen Mediums, insbesondere Wasser, unter Ausbildung einer Hydrathülle wird vorliegend nicht als Hydratisierung angesehen.

Falls das flüssige Medium z.B. ein Wasser enthaltendes flüssiges Medium ist, als Hauptbestandteil Wasser enthält oder gänzlich in Form von Wasser vorliegt, wird das mineralische Bindemittel während dem Mahlvorgang zumindest teilweise, insbesondere vollständig, üblicherweise hydratisiert. Aufgrund des erfindungsgemässen Mahlvorgangs und der damit verbundenen Bewegung wird ein festsetzen erhärteter Hydratphasen im Mahlraum jedoch verhindert.

Dadurch bilden sich Hydratphasen, welche bis auf die Partikelgrössen eine vergleichbare Struktur aufweisen wie herkömmliche hydratisierte mineralische Bindemittel. Derartige Hydratphasen mit Partikelgrößen von beispielsweise weniger als 60 nm eignen sich im Besonderen als Keime für Kristallwachstum in mineralischen Bindemitteln.

Es ist aber beispielsweise auch möglich, das mineralische Bindemittel durch das flüssige Medium erst nach erfolgter Mahlung zumindest teilweise, insbesondere vollständig zu hydratisieren.

Im Besonderen umfasst das flüssige Medium eine polare Flüssigkeit oder es besteht daraus. Die polare Flüssigkeit oder das flüssige Medium weisen insbesondere eine relative Permittivität εᵣ > 5, bevorzugt > 20, im Besonderen > 50, besonders bevorzugt > 70 auf, wobei die Permittivität insbesondere bei einer Temperatur von 25°C einem Druck von 1 bar gemessen wird. Die relative Permittivität εᵣ wir auch als Dielektrizitätszahl bezeichnet und stellt das Verhältnis von Permittivität ε zur Permittivität ε₀ des Vakuums dar. Derartige Flüssigkeiten oder Medien haben sich vorliegend als besonders geeignete flüssige Medien herausgestellt.

Grundsätzlich ist es aber auch möglich, ein flüssiges Medium enthaltend oder bestehend aus apolaren Flüssigkeiten einzusetzen. In einer besonderen Ausführungsform können auch Mischungen aus polaren und apolaren Flüssigkeiten vorgesehen werden.

Das flüssige Medium weist mit Vorteil bei einem Druck von 1 bar einen Siedepunkt von 60 - 290°C, insbesondere 75 - 250°C, bevorzugt 90 - 150°C, auf. Damit wird im Besonderen ein Verdampfen des flüssigen Mediums während dem Mahlvorgang reduziert.

Ganz besonders bevorzugt enthält das flüssige Medium Wasser und/oder Alkohol oder es besteht daraus. Speziell bevorzugt enthält oder besteht das flüssige Medium aus Wasser. Als Alkohole sind z.B. Methanol, Ethanol, Propanol, Butanol, Diethylenglycol und/oder Triethylenglycol, geeignet. Mit derartigen flüssigen Medien können optimal wirkende Erhärtungsbeschleuniger hergestellt werden, wenn der mineralische Feststoff wie vorstehend erwähnt zugleich ein mineralisches Bindemittel enthält.

Andere flüssige Medien sind aber ebenfalls verwendbar, z.B. Toluol, Dibutylether und/oder Cyclohexan.

Besonders bevorzugt wird der mineralische Feststoff im erfindungsgemässen Verfahren zu Partikeln mit einer durchschnittliche Partikelgrösse < 600 nm, insbesondere < 300 nm, bevorzugt < 200 nm, im Besonderen < 100 nm, im ganz Besonderen < 60 nm oder im Speziellen < 25 nm, vermahlen. Die durchschnittliche Partikelgrösse steht dabei im Besonderen für den D50-Wert.

Weiter bevorzugt wird der mineralische Feststoff im erfindungsgemässen Verfahren zu Partikeln mit einem D95-Wert < 600 nm, insbesondere < 300 nm, bevorzugt < 200 nm, im Besonderen < 100 nm, im Speziellen < 60 nm oder < 25 nm vermahlen. Der D95-Wert bedeutet, dass 95% der Partikel kleiner sind als der angegebene Wert, während 5% der Partikel grösser sind.

Solche Partikelgrössen bzw. Partikelgrössenverteilungen haben ergeben besonders wirksame Erhärtungsbeschleuniger.

Nach einer weiteren vorteilhaften Ausführungsform wird der mineralische Feststoff vor der Mahlung im flüssigen Medium dispergiert. Die Dispergierung erfolgt insbesondere durch Aufbringung von Scherkräften wobei bevorzugt im mineralischen Feststoff vorhandene Agglomerate aufgebrochen werden. Die Dispergierung wird bevorzugt so durchgeführt, dass sich während der Dispergierung im flüssigen Medium ein torusartiges Strömungsbild und/oder eine 360°-Driftdrehung auf der Stelle einstellen. Damit wird eine optimale Dispergierung ermöglicht.

Geeignete Vorrichtungen zur Dispergierung sind dem Fachmann an sich bekannt. Als besonders geeignet haben sich vorliegend Dissolver oder Scheibenrührer erwiesen.

Bevorzugterweise weist der mineralische Feststoff im flüssigen Medium einen Anteil von 5 - 95 Gew.-%, insbesondere 10 - 85 Gew.-%, bevorzugt, 15 - 70 Gew.-%, im Speziellen 20 - 60 Gew.-%, bezogen auf das Gesamtgewicht des flüssigen Mediums und des mineralischen Feststoffs, auf. Damit kann eine besonders effektive Zerkleinerung des mineralischen Feststoffs erreicht werden. Zudem wird bei der Verwendung von Wasser enthaltenden flüssigen Medien und mineralischen Feststoffen in Form von mineralischen Bindemitteln eine effektive Hydratation der mineralischen Feststoffe ermöglicht.

Für spezielle mineralische Feststoffe und/oder bei besonderen flüssigen Medien können aber auch andere Anteile des mineralischen Feststoffs geeignet sein.

Derartig gemahlene mineralische Feststoffe können als Suspensionen ohne weitere Verarbeitung direkt als Abbinde- und/oder Erhärtungsbeschleuniger eingesetzt werden. Es kann aber vorteilhaft sein, die gemahlenen mineralische Feststoffe vor der Verwendung mit einem flüssigen Medium, insbesondere Wasser, zu verdünnen. Dadurch kann beispielsweise die Dosierbarkeit verbessert werden.

Weiter bevorzugt wird vor, während und/oder nach der Mahlung wenigstens ein Zusatzmittel, insbesondere ein Betonzusatzmittel, ein Mörtelzusatzmittel und/oder eine Prozesschemikalie, zugegeben. Das Zusatzmittel ist insbesondere ausgewählt aus der Gruppe bestehend aus Dispergiermittel, Fliessmittel, Verflüssiger, Luftporenbildner, Entschäumer, Konservierungsmittel, Biozide, Farbstoff, Beschleuniger, Verzögerer, Schwindreduzierer, Korrosionsinhibitor oder Kombinationen davon. Weiterhin kann es von Vorteil sein, viskositätsverändernde und/oder suspensionsstabilisierende Zusatzmittel zuzugeben. Dies können insbesondere Cellulose, z.B. (derivatisierte) Methylcellulose, und/oder Stärke, z.B. (derivatisierte) Kartoffelstärke), sein. Damit kann ein eventuelles Sedimentieren der Feststoffpartikel zu verringert bzw. verhindert werden.

Mit Vorteil wird als Zusatzmittel ein Dispergiermittel, Fliessmittel und/oder ein Verflüssiger für mineralische Bindemittelzusammensetzungen eingesetzt. Besonders geeignet sind beispielsweise Lignosulfonate, sulfonierte Naphthalin-Formaldehyd-Kondensate, sulfonierte Melamin-Formaldehyd-Kondensate, sogenannte Kammpolymere, sulfonierte Vinylcopolymere, Polycarboxylate, Polycarboxylatether oder Mischungen davon.

Durch die Zugabe von Dispergiermitteln, Fliessmitteln und/oder Verflüssigern für mineralische Bindemittelzusammensetzungen kann im Speziellen die Dispergierung des mineralischen Feststoffs im flüssigen Medium verbessert werden. Dies wiederum bewirkt eine effizientere Mahlung. Insbesondere können dadurch der Zeitbedarf und Energieaufwand beim Mahlvorgang reduziert werden bzw. die Mahlung zu feineren Primärpartikeln wird ermöglicht.

Das Zusatzmittel beinhaltet im Speziellen ein Polycarboxylat, insbesondere einen Polycaboxylatether. Insbesondere ist das Zusatzmittel ein Kammpolymer umfassend ein Polycarboxylatrückgrat mit daran gebundenen Polyetherseitenketten. Die Seitenketten sind dabei insbesondere über Ester-, Ether-, Imid- und/oder Amidgruppen an das Polycarboxylatrückgrat gebunden.

Vorteilhafte Kammpolymere sind z.B. Copolymere aus (Meth)acrylsäure- und/oder Maleinsäuremonomeren sowie Monomeren ausgewählt aus Polyalkylenglykol-vinylethern, Polyalkylenglykol-(meth)allylethern, oder Polyalkylenglykol- isoprenylethern. Besonders geeignet sind z.B. Copolymere aus Maleinsäure oder deren Derivaten, Allylethern, insbesondere Allyl-Polyethylenglycole, und Vinylacetat. Entsprechende Copolymere sowie deren Herstellung sind beispielsweise in der EP 2 468 696 A1 (Sika Technology AG) beschrieben. Insbesondere geeignet sind z.B. sind die Copolymere P-1 bis P-4 wie sie in den Absätzen 0058 bis 0061 und Tabelle 1 der EP 2 468 696 A1 beschrieben sind.

Ebenfalls geeignet sind beispielsweise Copolymere aus Maleinsäure oder deren Derivaten, Allylethern, insbesondere Allyl-Polyethylenglycole, und (Meth)acrylsäure. Derartige Copolymere und deren Herstellung sind in der EP 2 522 680 A1 (Sika Technology AG) beschrieben. Vorteilhaft sind dabei z.B. sind die Copolymere P-1 bis P-4 wie sie in den Absätzen 0063 bis 0070 und Tabelle 1 der EP 2 522 680 A1 beschrieben sind.

Des Weiteren sind geeignete Kammpolymere und Herstellungsverfahren beispielsweise offenbart in der EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in deren Beispielen. In einer Abart davon, wie sie in EP 1 348 729 A1 auf Seite 3 bis Seite 5 sowie in deren Beispielen beschrieben sind, kann das Kammpolymer in festem Aggregatszustand hergestellt werden.

Die Offenbarungen der im Zusammenhang mit den Kammpolymeren genannten Patentschriften werden hiermit insbesondere durch Bezugnahme eingeschlossen.

Entsprechende Kammpolymere werden auch von Sika Schweiz AG unter der Handelsnamenreihe ViscoCrete^{®} kommerziell vertrieben.

Gemäss einer weiteren vorteilhaften Ausführungsform wird als Zusatzmittel wenigstens eine erhärtungsbeschleunigende und/oder erstarrungsbeschleunigende Substanz zugegeben. Grundsätzlich können hierbei eine Vielzahl von dem Fachmann bekannten Substanzen eingesetzt werden. Besonders vorteilhaft umfasst die erhärtungsbeschleunigende und/oder erstarrungsbeschleunigende Substanz jedoch ein oder mehrere der folgenden Vertreter:
a) ein oder mehrere weitere Aminoalkohole und/oder Salze davon
b) ein oder mehrere Alkali- und/oder Erdalkalinitrate
c) ein oder mehrere Alkali- und/oder Erdalkalinitrite
d) ein oder mehrere Alkali- und/oder Erdalkalithiocyanate
e) ein oder mehrere α-Hydroxycarbonsäuren
f) ein oder mehrere Alkali- und/oder Erdalkalihalogenide
g) ein oder mehrere Aluminiumsalze
h) ein oder mehrere Alkali- und/oder Erdalkalihydroxide
i) ein oder mehrere Alkalicarbonate.

Die Zugabe kann vor, während und/oder nach dem Mahlprozess erfolgen.

Es kann insbesondere auch vorteilhaft sein, als Zusatzmittel einen Verzögerer zuzugeben, beispielsweise ausgewählt aus der Liste umfassend Hydroxycarbonsäuren, Saccharose und/oder Phosphate.

Wie sich gezeigt hat, sind die erfindungsgemäss herstellbaren Abbinde- und Erhärtungsbeschleuniger mit diesen Vertretern von erhärtungs- bzw. erstarrungsbeschleunigenden Substanzen im Allgemeinen gut kompatibel. Damit lässt sich beispielsweise eine flexible Anpassung an spezielle Verwendungen realisieren.

Ein Anteil des Zusatzmittels beträgt insbesondere 0.001 - 10 Gew.-%, bevorzugt 0.01 - 7 Gew.-%, speziell bevorzugt 0.05 - 6 Gew.-% oder 0.1 - 5 Gew.-%, bezogen auf das Gewicht des mineralischen Feststoffs. Damit wir eine optimale Wirkung der Zusatzmittel erreicht. Dies insbesondere falls es sich um ein Dispergiermittel, einen Verflüssiger und/oder ein Fliessmittel für mineralische Bindemittelzusammensetzungen handelt.

Besonders bevorzugt werden zur Herstellung eines Abbinde- und/oder Erhärtungsbeschleunigers 10 - 60 Gew.-% mineralischer Feststoff, 0.5 - 5 Gew.-% eines Polycaboxylatethers, und 40 - 85 Gew.-% Wasser einer Mahlung unterzogen.

Dabei wird als mineralischer Feststoff Kalkstein, Kalksteinmehl und Zement verwendet. Als Polycarboxylatether ist ein Kammpolymer umfassend ein Polycarboxylatrückgrat mit daran gebundenen Polyetherseitenketten geeignet, wobei die Seitenketten insbesondere über Ester-, Ether-, Imid- und/oder Amidgruppen an das Polycarboxylatrückgrat gebunden sind.

Ein weiterer Aspekt der vorliegenden Erfindung betrifft ein besonders vorteilhaftes Verfahren zur Herstellung eines Abbinde- und/oder Erhärtungsbeschleunigers in flüssiger Form, insbesondere als Suspension, bevorzugt als wässrige Suspension, umfassend folgende Schritte:
a) Dispergieren eines inerten mineralischen Feststoffs ausgewählt aus der Gruppe bestehend aus Kalkstein und/oder Kalksteinmehl. Besonders bevorzugt verfügt der dispergierte Kalkstein und/oder Kalksteinmehl über eine durchschnittliche Partikelgrösse < 600 nm, insbesondere < 300 nm, bevorzugt < 200 nm, im Besonderen < 100 nm, im ganz Besonderen < 60 nm oder im Speziellen < 25 nm. Der dispergierte Kalkstein und/oder Kalksteinmehl ist dabei insbesondere aus einem vorstehend beschriebenen Mahlverfahren erhältlich oder wird mit Vorteil durch ein solches hergestellt. Dies ist aber nicht zwingend;
b) Dispergieren eines Zements. Bevorzugt wird Zement dabei wenigstens teilweise oder vollständig hydratisiert. Besonders bevorzugt verfügt der dispergierte Zement, über eine durchschnittliche Partikelgrösse < 600 nm, insbesondere < 300 nm, bevorzugt < 200 nm, im Besonderen < 100 nm, im ganz Besonderen < 60 nm oder im Speziellen < 25 nm.) Der dispergierte Zement kann, gegebenenfalls zusammen mit Kalkstein und/oder Kalksteinmehl, aus einem vorstehend beschriebenen Mahlverfahren erhalten werden. Es ist aber auch möglich, Kalkstein und/oder Kalksteinmehl und/oder Zement separat bereitzustellen und/oder zu mahlen und Kalkstein und/oder Kalksteinmehl und/oder Zement danach mit den anderen Bestandteilen zu vermischen, insbesondere ohne gemeinsame Mahlung.

Dabei werden Kalkstein und/oder Kalksteinmehl und Zement in der gleichen Flüssigkeit dispergiert, so dass ein Abbinde- und/oder Erhärtungsbeschleuniger erhalten wird, in welchen sowohl Kalkstein und/oder Kalksteinmehl als auch Zement in dispergierter Form oder in Form von suspendierten Partikeln in der gleichen Flüssigkeit vorliegen.

Derart hergestellte Abbinde- und/oder Erhärtungsbeschleuniger in flüssiger Form haben sich überraschenderweise als besonders effektiv herausgestellt. Ohne an eine Theorie gebunden zu sein, wird davon ausgegangen, dass Kalkstein und/oder Kalksteinmehl und Zement in Suspension bei der Verwendung als Abbinde- und/oder Erhärtungsbeschleuniger funktional zusammenwirken, so dass ein synergistischer Effekt resultiert. Dabei wirken Kalkstein und/oder Kalksteinmehl und Zement stärker beschleunigend als wenn die gleichen Mengen an Kalkstein und/oder Kalksteinmehl und Zement separat zu einer zu beschleunigenden Bindemittelzusammensetzung gegeben werden.

Besonders bevorzugt wird zuerst Kalkstein und/oder Kalksteinmehl in einer Flüssigkeit, insbesondere Wasser, dispergiert und anschliessend Zement in derselben Flüssigkeit dispergiert. Bevorzugt wird die so gebildete Suspension nach der Zugabe des Zements während wenigsten 30 Minuten, bevorzugt während wenigstens 1 Stunde, stehen gelassen und/oder gerührt. Damit wird eine besonders homogene Suspension gebildet.

Kalkstein und/oder Kalksteinmehl und Zement können aber prinzipiell auch in zwei getrennten Suspensionen bereitgestellt werden und anschliessend diese beiden Suspensionen vermischt werden. Auch in diesem Fall empfiehlt es sich, die so vermischten Suspensionen während wenigsten 30 Minuten, bevorzugt während wenigstens 1 Stunde, stehen zu lassen und/oder zu rühren.

Die Dispergierung des Kalksteins und/oder Kalksteinmehls und/oder des Zements erfolgt wie vorstehend beschrieben insbesondere durch Aufbringung von Scherkräften. Die Dispergierung wird bevorzugt so durchgeführt, dass sich während der Dispergierung im flüssigen Medium ein torusartiges Strömungsbild und/oder eine 360°-Driftdrehung auf der Stelle einstellen. Damit wird eine optimale Dispergierung ermöglicht.

Geeignete Vorrichtungen zur Dispergierung sind dem Fachmann, wie ebenfalls bereits gesagt, an sich bekannt. Als besonders geeignet haben sich vorliegend Dissolver oder Scheibenrührer erwiesen.

Der Anteil an Flüssigkeit wird im Besonderen so gewählt, dass die Flüssigkeit, insbesondere Wasser, bevorzugt den Hauptbestandteil des Abbinde- und/oder Erhärtungsbeschleunigers in flüssiger Form bildet. Dies bedeutet, dass die Flüssigkeit bevorzugt den Bestanteil mit dem grössten Gewichtsanteil im flüssigen Abbinde- und/oder Erhärtungsbeschleuniger bildet.

Ein Anteil an Flüssigkeit im Abbinde- und/oder Erhärtungsbeschleuniger, insbesondere Wasser, beträgt bevorzugt 40 - 85 Gew.-% bezogen auf das Gesamtgewicht des Abbinde- und/oder Erhärtungsbeschleunigers.

Ein Anteil an Feststoffen im Abbinde- und/oder Erhärtungsbeschleuniger beträgt vorzugsweise 15 - 60 Gew.-% bezogen auf das Gesamtgewicht des Abbinde- und/oder Erhärtungsbeschleunigers.

Besonders bevorzugt umfasst der Abbinde- und/oder Erhärtungsbeschleuniger 90 - 99.9 Gew-%, insbesondere 95 - 99 Gew.-%, des Kalkstein und/oder Kalksteinmehl, und 0.1 - 10 Gew.-%, im Besonderen 1 - 5 Gew.-%, Zement, jeweils bezogen auf den Feststoffgehalt des Abbinde- und/oder Erhärtungsbeschleuniger.

Weiter ist es bevorzugt, wenn der Abbinde- und/oder Erhärtungsbeschleuniger bezogen auf das Gesamtgewicht des Abbinde- und/oder Erhärtungsbeschleunigers 0.5 - 5 Gew.-% eines Dispergiermittels, insbesondere eines Polycaboxylatethers, beinhaltet.

Weiter betrifft die vorliegende Erfindung ein Verfahren zur Beschleunigung des Abbindens und/oder Erhärtens eines mineralischen Bindemittels, insbesondere eines hydraulischen Bindemittels eines latent-hydraulischen Bindemittels und/oder eines puzzolanischen Bindemittels, umfassend wenigstens die folgenden Schritte:
a) Herstellung eines Abbinde- und/oder Erhärtungsbeschleunigers gemäss einem Verfahren wie es vorstehend beschrieben ist,
b) Zugabe des in Schritt a) erhaltenen Abbinde- und/oder Erhärtungsbeschleuniger zum zu beschleunigenden mineralischen Bindemittel.

Besonders bevorzugt umfasst dabei der in Schritt a) bei der Mahlung eingesetzte mineralische Feststoff das in Schritt b) verwendete und zu beschleunigende mineralische Bindemittel.

Mit anderen Worten wird der Abbinde- und/oder Erhärtungsbeschleuniger in Schritt a) bevorzugt wenigstens teilweiseausgehende vom zu beschleunigenden mineralischen Bindemittel hergestellt.

Damit werden besonders effektive Abbinde- und/oder Erhärtungsbeschleuniger erhalten, welche zudem bestmöglich kompatibel sind mit dem zu beschleunigenden mineralischen Bindemittel. Der Beschleuniger beeinträchtigt dabei die Verarbeitbarkeit des mineralischen Bindemittels oder eine Zusammensetzungen enthaltend diese kaum bis gar nicht oder dies kann durch Kombination mit einem Zusatzmittel, beispielsweise einem Dispergiermittel, in einfacher Art und Weise sichergestellt werden.

Ein weiterer Aspekt der vorliegenden Erfindung betrifft einen Abbinde- und/oder Erhärtungsbeschleuniger für ein mineralisches Bindemittel.

Der Abbinde- und/oder Erhärtungsbeschleuniger ist aus einem vorstehend beschriebenen Verfahren erhältlich.

Der Abbinde- und/oder Erhärtungsbeschleuniger enthält einen wie vorstehend beschriebenen mineralischen Feststoff, wobei der mineralische Feststoff bevorzugt eine durchschnittliche Partikelgrösse < 600 nm, insbesondere < 300 nm, bevorzugt < 200 nm, im Besonderen < 100 nm, im ganz Besonderen < 60 nm, im Speziellen < 25 nm, aufweist. Weiter bevorzugt weisen die Partikel des mineralischen Feststoffs einen D95-Wert < 600 nm, insbesondere < 300 nm, bevorzugt < 200 nm, im Besonderen < 100 nm, im ganz Besonderen < 60 nm, im Speziellen < 25 nm, auf.

Der Abbinde- und/oder Erhärtungsbeschleuniger liegt als Suspension vor, bevorzugt als wässrige Suspension, wobei der mineralische Feststoff in Form von suspendierten Partikeln vorliegt. Bevorzugterweise weist der Abbinde- und/oder Erhärtungsbeschleuniger einen Feststoffgehalt oder einen Anteil an gemahlenem mineralischen Feststoff von 5 - 95 Gew.-%, insbesondere 10 - 80 Gew.-%, bevorzugt, 15 - 70 Gew.-%, im Speziellen 20 - 60 Gew.-%, bezogen auf das Gesamtgewicht des Abbinde- und/oder Erhärtungsbeschleunigers auf.

Ganz besonders bevorzugt enthält der Abbinde- und/oder Erhärtungsbeschleuniger Wasser und/oder Alkohol. Speziell bevorzugt enthält der Abbinde- und/oder Erhärtungsbeschleuniger Wasser.

Suspensionen lassen sich einerseits gut dosieren und effektiv in mineralischen Bindemittelzusammensetzungen vermischen. Andererseits sind Abbinde- und/oder Erhärtungsbeschleuniger in Form von Suspensionen ohne weitere Aufbereitung direkt aus den vorstehend beschriebenen Herstellungsverfahren erhältlich. Dies vereinfacht die Herstellung wesentlich.

Gemäss einer ganz bevorzugten Ausführungsform liegt der Abbinde- und/oder Erhärtungsbeschleuniger als Suspension, bevorzugt als wässrige Suspension, umfassend folgende Bestandteile:
a) Einen dispergierten inerten mineralischen Feststoff ausgewählt aus der Gruppe bestehend aus Kalkstein, Kalksteinmehl, oder Mischungen davon. Besonders bevorzugt verfügt der Kalkstein und/oder Kalksteinmehl über eine durchschnittliche Partikelgrösse < 600 nm, insbesondere < 300 nm, bevorzugt < 200 nm, im Besonderen < 100 nm, im ganz Besonderen < 60 nm oder im Speziellen < 25 nm. Der dispergierte inerte mineralische Feststoff ist dabei insbesondere aus einem vorstehend beschriebenen Mahlverfahren erhältlich oder wird mit Vorteil durch ein solches hergestellt. Dies ist aber nicht zwingend;
b) Ein dispergiertes mineralisches Bindemittel, insbesondere ein hydraulisches Bindemittel (z.B. Zement oder hydraulischer Kalk), ein latent hydraulisches Bindemittel (z.B. Schlacke), ein puzzolanisches Bindemittel (z.B. Flugasche) und/oder ein nicht hydraulisches Bindemittel (Gips oder Weisskalk). Bevorzugt ist das dispergierte mineralische Bindemittel dabei wenigstens teilweise oder vollständig hydratisiert. Im Besonderen handelt es sich beim dispergierten mineralischen Bindemittel um ein hydraulisches Bindemittel, bevorzugterweise um Zement. Besonders bevorzugt verfügt das dispergierte mineralische Bindemittel, insbesondere Zement, über eine durchschnittliche Partikelgrösse < 600 nm, insbesondere < 300 nm, bevorzugt < 200 nm, im Besonderen < 100 nm, im ganz Besonderen < 60 nm oder im Speziellen < 25 nm. Das dispergierte mineralische Bindemittel kann, gegebenenfalls zusammen mit dem inerten mineralischen Feststoff, aus einem vorstehend beschriebenen Mahlverfahren erhalten werden. Es ist aber auch möglich, den inerten Feststoff und/oder das mineralische Bindemittel separat bereitzustellen und/oder zu mahlen und den inerten Feststoff und/oder das mineralische Bindemittel danach mit den anderen Bestanteilen zu vermischen, insbesondere ohne gemeinsame Mahlung.

In einem solchen Abbinde- und/oder Erhärtungsbeschleuniger liegen sowohl der inerte mineralische Feststoff als auch das mineralische Bindemittel in dispergierter Form oder in Form von suspendierten Partikeln vor. Dabei resultiert der bereits vorstehend beschriebene synergistische Effekt. Dabei handelt es sich im Besonderen um eine einkomponentige Zusammensetzung. Damit ist gemeint, dass sowohl der inerte mineralische Feststoff als auch das mineralisches Bindemittel in derselben Flüssigkeit vorliegen.

Die Flüssigkeit, insbesondere Wasser, bildet bevorzugt den Hauptbestandteil des Abbinde- und/oder Erhärtungsbeschleunigers in flüssiger Form. Dies bedeutet, dass die Flüssigkeit bevorzugt den Bestanteil mit dem grössten Gewichtsanteil im flüssigen Abbinde- und/oder Erhärtungsbeschleuniger bildet.

Ein Anteil an Flüssigkeit im Abbinde- und/oder Erhärtungsbeschleuniger, insbesondere Wasser, beträgt bevorzugt 40 - 85 Gew.-% bezogen auf das Gesamtgewicht des Abbinde- und/oder Erhärtungsbeschleunigers. Ein Anteil an Feststoffen im Abbinde- und/oder Erhärtungsbeschleuniger beträgt vorzugsweise 15 - 60 Gew.-%, bezogen auf das Gesamtgewicht des Abbinde- und/oder Erhärtungsbeschleunigers.

Der Abbinde- und/oder Erhärtungsbeschleuniger umfasst 90 - 99.9 Gew-%, insbesondere 95 - 99 Gew.-%, des Kalkstein und/oder Kalksteinmehl, und 0.1 - 10 Gew.-%, im Besonderen 1 - 5 Gew.-%, des mineralisches Bindemittels, insbesondere Zement, jeweils bezogen auf den Feststoffgehalt des Abbinde- und/oder Erhärtungsbeschleuniger.

Weiter ist es bevorzugt, wenn der Abbinde- und/oder Erhärtungsbeschleuniger bezogen auf das Gesamtgewicht des Abbinde- und/oder Erhärtungsbeschleunigers 0.5 - 5 Gew.-% eines Dispergiermittels, insbesondere eines Polycaboxylatethers, beinhaltet.

Zudem kann der Abbinde- und/oder Erhärtungsbeschleuniger zusätzlich oder anstelle der hier genannten Bestandteile ein oder mehrere der oben genannten Bestandteile, insbesondere Zusatzmittel, ein Betonzusatzmittel, ein Mörtelzusatzmittel und/oder eine Prozesschemikalie, zugegeben werden.

Optional ist zudem ein wie vorstehend beschriebenes Zusatzmittel, insbesondere ein Betonzusatzmittel, ein Mörtelzusatzmittel und/oder eine Prozesschemikalie, im Abbinde- und/oder Erhärtungsbeschleuniger vorhanden.

Im Besonderen enthält die Zusammensetzung zudem ein wie vorstehend beschriebenes Dispergiermittel, ein Fliessmittel und/oder einen Verflüssiger. Ganz besonders bevorzugt handelt es sich dabei um ein wie vorstehen definiertes Kammpolymer.

Gemäss einer weiteren vorteilhaften Ausführungsform enthält die Zusammensetzung eine weitere erhärtungsbeschleunigende und/oder erstarrungsbeschleunigende Substanz. Besonders vorteilhaft umfasst die weitere erhärtungsbeschleunigende und/oder erstarrungsbeschleunigende Substanz ein oder mehrere der folgenden Vertreter:
a) ein oder mehrere weitere Aminoalkohole und/oder Salze davon
b) ein oder mehrere Alkali- und/oder Erdalkalinitrate
c) ein oder mehrere Alkali- und/oder Erdalkalinitrite
d) ein oder mehrere Alkali- und/oder Erdalkalithiocyanate
e) ein oder mehrere a-Hydroxycarbonsäuren
f) ein oder mehrere Alkali- und/oder Erdalkalihalogenide
g) ein oder mehrere Aluminiumsalze
h) ein oder mehrere Alkali- und/oder Erdalkalihydroxide
i) ein oder mehrere Alkalicarbonate.

In einer bevorzugten Ausführungsform ist der Abbinde- und/oder Erhärtungsbeschleuniger aber im Wesentlichen frei von metallkorrosiven Substanzen. Insbesondere ist der Abbinde- und/oder Erhärtungsbeschleuniger im Wesentlichen frei von Chloriden, Thiocyanaten, Nitriten und/oder Nitraten. "Im Wesentlichen frei" meint vorliegend, dass der Anteil an den genannten Substanzen bezogen auf das Gesamtgewicht des Abbinde- und/oder Erhärtungsbeschleuniger kleiner als 1 Gew.-%, insbesondere kleiner als 0.5 Gew.-%, im Besonderen kleiner als 0.1 Gew.-%, ist. Dadurch sind Abbinde- und/oder Erhärtungsbeschleuniger erhältlich, welche im Besonderen Masse geeignet sind, in stahlbewehrtem Beton oder Spannbeton eingesetzt zu werden. Für spezielle Anwendungen ist aber durchaus möglich, mineralische Feststoffe enthaltend korrosive Substanzen vorzusehen.

Nicht beansprucht ist eine Bindemittelzusammensetzung, enthaltend eine Komponente einer mineralischen Bindemittelzusammensetzung, insbesondere ein Bindemittel und/oder Aggregate und/oder ein Zusatzmittel, sowie einen wie vorstehend beschriebenen Abbinde- und/oder Erhärtungsbeschleuniger. Insbesondere ist die Zusammensetzung eine Bindemittelzusammensetzung enthaltend ein mineralisches Bindemittel. Die Zusammensetzung kann z.B. in trockener Form oder als eine mit Anmachwasser angemachte fluide oder angesteifte Bindemittelzusammensetzung vorliegen. Auch kann die Zusammensetzung als eine ausgehärtete Bindemittelzusammensetzung, z.B. als Formkörper, vorliegen.

Die mineralischen Bindemittel sind dabei wie vorstehend definiert. Als Aggregate können z.B. Gesteinskörnungen, Kies, Sand (in natürlicher und/ oder bearbeiteter (z.B. gebrochener) Form) und/oder Füller vorliegen. Besonders bevorzugt enthält die Zusammensetzung einen Abbinde- und/oder Erhärtungsbeschleuniger umfassend ein gemahlenes mineralisches Bindemittel, insbesondere mit den Partikelgrössenverteilungen wie sie vorstehende beschrieben sind, sowie ein weiteres mineralisches Bindemittel, welches insbesondere die gleiche chemische Struktur aufweist wie das gemahlene mineralische Bindemittel, jedoch eine andere Partikelgrössenverteilung aufweist.

Ein Anteil des Abbinde- und/oder Erhärtungsbeschleuniger bezogen auf das Gewicht des mineralischen Bindemittels, falls vorhanden, beträgt insbesondere 0.01 - 10 Gew.-%, speziell 0.1 - 5 Gew.-%.

Optional ist zudem ein wie vorstehend beschriebenes Zusatzmittel, insbesondere ein Betonzusatzmittel, ein Mörtelzusatzmittel und/oder eine Prozesschemikalie, in der Zusammensetzung vorhanden.

Im Besonderen enthält die Zusammensetzung zudem ein wie vorstehend beschriebenes Dispergiermittel, ein Fliessmittel und/oder einen Verflüssiger. Ganz besonders bevorzugt handelt es sich dabei um ein wie vorstehen definiertes Kammpolymer.

Falls vorhanden, weist das Dispergiermittel, das Fliessmittel und/oder der Verflüssiger bezogen auf ein vorhandenes mineralische Bindemittel mit Vorteil einen Anteil von 0.01 - 6 Gew.-%, insbesondere 0.1 - 4 Gew.- %, weiter bevorzugt 0.5 - 3 Gew.-%, auf. Aufgrund der Kombination mit dem Dispergiermittel, dem Fliessmittel und/oder dem Verflüssiger kann die Verarbeitbarkeit der Bindemittelzusammensetzung verbessert werden und zugleich werden höhere Druckfestigkeiten erreicht. Letzteres insbesondere auch zu späten Zeiten, z.B. nach 28 Tagen.

Die Zusammensetzung kann des weiteren Wasser enthalten. Beispielsweise kann die Zusammensetzung als eine mit Anmachwasser angemachte fluide oder angesteifte Bindemittelzusammensetzung vorliegen. Im Falle einer mit Anmachwasser angemachten, fluiden Bindemittelzusammensetzung beträgt ein Verhältnis von Wasser zu mineralischem Bindemittel bevorzugt 0.15 - 0.80, insbesondere 0.25 - 0.75 oder 0.35 - 0.65. Derartige Bindemittelzusammensetzungen lassen sich als Mörtel- oder Betonmischungen direkt verarbeiten.

Nicht beansprucht ist ein Formkörper erhältlich durch Aushärten einer Zusammensetzung wie sie vorstehend beschrieben ist, nach Zugabe von Wasser. Der so hergestellte Formkörper kann dabei nahezu jede beliebige Form aufweisen und beispielsweise Bestandteil eines Bauwerks, wie z.B. eines Gebäudes, eines Mauerwerks oder einer Brücke, sein.

Nicht beansprucht ist ein Verfahren zur Herstellung einer Zusammensetzung. Dabei wird ein wie vorstehend beschriebener Abbinde- und/oder Erhärtungsbeschleuniger, insbesondere in Form einer wässrigen Suspension, mit einer Komponente einer mineralischen Bindemittelzusammensetzung, insbesondere einem Bindemittel und/oder Aggregaten und/oder einem Zusatzmittel, vermischt. Insbesondere ist die Zusammensetzung eine Bindemittelzusammensetzung enthaltend ein mineralisches Bindemittel, bevorzugt ein zementöses Bindemittel. Das mineralische Bindemittel kann dabei wie vorstehend beschrieben vorliegen und insbesondere die oben genannten hydraulischen, latenthydraulischen und/oder puzzolanischen Bindemittel enthalten.

Ein Anteil des Abbinde- und/oder Erhärtungsbeschleuniger bezogen auf das Gewicht des mineralischen Bindemittels, beträgt bei der Verwendung insbesondere 0.01 - 10 Gew.-%, speziell 0.1 - 5 Gew.-%.

Zudem können die vorstehend genannten Zusatzmittel in den entsprechenden Mengen beigegeben werden.

Ein zusätzlicher Aspekt der vorliegenden Erfindung betrifft die Verwendung eines wie vorstehend beschriebenen Abbinde- und/oder Erhärtungsbeschleunigers, insbesondere in Form einer wässrigen Suspension, zur Beschleunigung des Abbindens und/oder Erhärtens eines mineralischen Bindemittels und/oder von mineralischen Bindemittelzusammensetzungen, insbesondere einer zementösen Bindemittelzusammensetzung, bevorzugt einer Mörtel- und/oder Betonzusammensetzung.

Besonders bevorzugt enthält dabei der Abbinde- und/oder Erhärtungsbeschleuniger ein gemahlenes mineralisches Bindemittel für welches der Abbinde- und/oder Erhärtungsbeschleuniger zur Beschleunigung verwendet wird.

Die verwendeten Abbinde- und/oder Erhärtungsbeschleuniger, Suspensionen, mineralischen Bindemittel und mineralischen Bindemittelzusammensetzungen sind dabei wie vorstehend definiert.

Die Abbinde- und/oder Erhärtungsbeschleuniger werden im Besonderen dazu verwendet, die Druckfestigkeit von mineralischen Bindemittelzusammensetzungen nach 2 - 24 h, insbesondere nach 2 - 12 h, bevorzugt nach 2 - 8 h, im Speziellen nach 4 - 8 h oder 6 - 8 h nach dem Anmachen zu erhöhen.

Die nachfolgenden Ausführungsbeispiele verdeutlichen die Erfindung weiter.

### Kurze Beschreibung der Zeichnung

Fig. 1 zeigt eine mit einem Rasterelektronenmikroskop aufgenommene Abbildung eines erfindungsgemäss hergestellten Beschleunigers nach Trocknung.
Fig. 2 zeigt die Temperaturverläufe während dem Aushärten von verschiedenen Mörtelproben mit den erfindungsgemäss hergestellten Erhärtungsbeschleunigern im Vergleich mit zwei Referenzproben.

### Ausführungsbeispiele

### 1. Herstellung von Erhärtungsbeschleunigern

### 1.1 Beschleuniger basierend auf Kalksteinmehl (nicht erfindungsgemäss)

Zur Herstellung einer Suspension wurden 30 Gew.-% Kalksteinmehl (Korngrösse 0.0 - 0.09 mm), 1.5 Gew.-% eines Polycarboxylatethers (z.B. Sika^{®} Viscocrete^{®} VC 2000, ein Kammpolymer mit Polycarboxylatrückgrat und über Estergruppen gebundenen Polyalkylenoxid-Seitenketten) und 68.5 Gew.-% Wasser vermischt. Sodann wurde die Suspension in einer Rührwerkskugelmühle mit Mahlperlen (Perlmühle) zu Fraktionen mit verschiedenen Partikelgrössen (D50-Werte) vermahlen. Im Anschluss an den Mahlvorgang wurde die Partikelgrösse jeder Fraktion durch Laserbeugung entsprechend Norm ISO 13320:2009 bestimmt. Folgende Fraktionen bzw. Erhärtungsbeschleuniger wurden erhalten:
A) **KSTM A:** D50-Wert = 625 nm
B) **KSTM B:** D50-Wert = 310 nm
C) **KSTM C:** D50-Wert = 140 nm

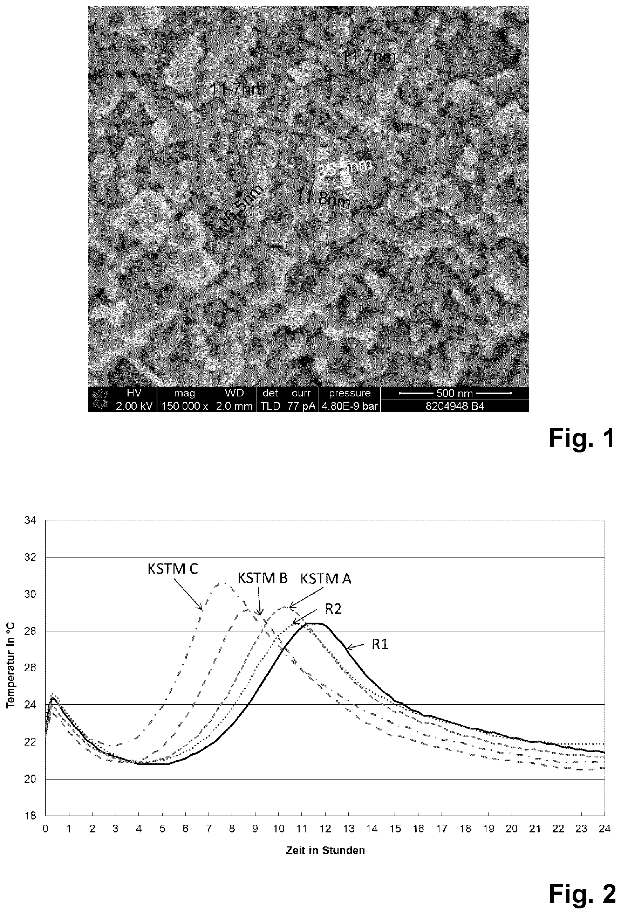

Fig. 1 zeigt eine repräsentative Abbildung eines erfindungsgemäss hergestellten und anschliessend im Vakuum getrockneten Erhärtungsbeschleunigers. Gut zu erkennen sind dabei Primärpartikel mit einer Grösse < 50 nm.

### 1.2 Beschleuniger basierend auf Kalksteinmehl und Zement (erfindungsgemäss)

In einem weiteren Satz von Experimenten wurden Kalksteinmehl analog zum oben in Kapitel 1.1 beschriebenen Verfahren in Wasser suspendiert, mit einem Polycarboxylatether dispergiert, gemahlen und anschliessend mit jeweils unterschiedlichen Mengen an Zement (Typ CEM I, jeweils identisch) versetzt und während mindestens 30 Minuten weitergerührt. Dabei wurden die folgenden Beschleuniger hergestellt:
D) **KCEM0:** Reine Kalksteinmehl-Suspension ohne Zusatz von Zement
E) **KCEM1:** Kalksteinmehl-Suspension mit 1 Gew.-% Zement (bezogen auf Gesamtgewicht der Suspension)
F) **KCEM2:** Kalksteinmehl-Suspension mit 2 Gew.-% Zement (bezogen auf Gesamtgewicht der Suspension)
G) **KCEM3:** Kalksteinmehl-Suspension mit 3 Gew.-% Zement (bezogen auf Gesamtgewicht der Suspension)

Alle Erhärtungsbeschleuniger **KCEM0 - KCEM3** enthalten zwecks Vergleichbarkeit jeweils die gleiche Menge an identischem Kalksteinmehl (20 Gew.-%, bezogen auf Gesamtgewicht), die gleiche Menge an identischem Polycarboxylatether (2 Gew.-%, bezogen auf Gesamtgewicht) und weisen das gleiche Gesamtgewicht auf. Letzteres wurde erreicht, indem bei den Erhärtungsbeschleunigern mit Zement der Wassergehalt, welcher den Hauptbestandteil bildet, um den entsprechenden Gewichtsanteil reduziert wurde.

### 1.3 2K-Beschleuniger basierend auf Kalksteinmehl und Zement (erfindungsgemäss)

Folgende zwei-komponentigen Beschleuniger wurden hergestellt:
H) **2K-KCEM-LL:**
   **Komponente 1:** Reine Kalksteinmehl-Suspension analog wie **KCEM0**, wobei das Wasser aber um mit 2 Gew.-% reduziert Wasser wurde; **Komponente 2:** 2 Gew.-% Zement (CEM I, identisch wie bei Beschleuniger in Kapitel 1.2) wurde in einem separaten Gefäss in Wasser über die gleiche Zeit gerührt und suspendiert. Die Gewichtsangabe von 2 Gew.-% bezieht sich vorliegend auf das Gewicht der ersten Komponente (Kalksteinmehl und Wasser und Polycarboxylatether) plus Zement, jedoch ohne das in der zweiten Komponente enthaltene Wasser. Es liegen also zwei beim Beschleuniger **2K-KCEM-LL** zwei separate wässrige Suspensionen vor, wobei die eine Suspension (= Komponente 1) suspendiertes Kalksteinmehl und die andere Suspension (= Komponente 2) suspendierten Zement enthält.
I) **2K-KCEM-LS:**
   **Komponente 1:** Reine Kalksteinmehl-Suspension wie Komponente 1 des vorstehend beschriebenen 2K-Beschleunigers **2K-KCEM-LL; Komponente 2:** 2 Gew.-% Zement (CEM I, identisch wie bei Beschleuniger in Kapitel 1.2) in pulverform in einem separaten Gefäss bereitgestellt. Es liegen also beim Beschleuniger **2K-KCEM-LS** eine wässrige Komponente (= Komponente 1; Kalksteinmehl-Suspension) und eine feste Komponente (= Komponente 2; Zementpulver) vor.

### 2. Herstellung von Mörtelzusammensetzungen

Zur Herstellung von Mörtelzusammensetzungen wurden Portlandzement, Sand und Anmachwasser, welchem jeweils eine der in Kapitel 1 genannten Fraktionen bzw. Erhärtungsbeschleuniger zugegeben wurden, sowie ein Fliessmittel in einem mechanischen Mischer gemischt. Beim Fliessmittel handelt es sich um ein modifiziertes Polycarboxylat in Form von Sika^{®} ViscoCrete^{®}-3081 S, ein Kammpolymer mit Polycarboxylatrückgrat und über Estergruppen gebundenen Polyalkylenoxid-Seitenketten.

### 3. Testverfahren

Zur Bestimmung der Wirksamkeit der Erhärtungsbeschleuniger wurden die Druckfestigkeiten der Mörtelmischungen 6, 8 und 24 Stunden nach dem Anmachen der Mörtelmischungen bestimmt. Die Prüfung zur Bestimmung der Druckfestigkeit (in N/mm²) erfolgte an Prismen (40 x 40 x 160mm) gemäss den Normen EN 196-1.

Weiter wurde der Temperaturverlauf von ausgewählten Mörtelmischungen zur Kontrolle der Hydratation bzw. des Abbindeverhaltens der Mörtelmischungen nach dem Anmachen aufgezeichnet. Die Temperaturmessung erfolgte mit einem Thermoelement als Temperatursensor in an sich bekannter Weise. Sämtliche Proben wurden unter gleichen Bedingungen gemessen.

### 4. Resultate

### 4.1 Temperaturverläufe in Mörtelproben

Fig. 2 zeigt die Temperaturverläufe von verschiedenen Mörtelproben während dem Aushärten mit den Erhärtungsbeschleunigern **KSTM A, KSTB B, KSTM C** im Vergleich mit zwei Referenzproben **R1** und **R2** unter vergleichbaren Bedingungen. Die Mörtelprobe **R1** wurde ohne Zugabe eines Erhärtungsbeschleunigers ansonsten aber wie die Proben mit den Erhärtungsbeschleunigern **KSTM A, KSTB B, KSTM C** hergestellt. Bei der Mörtelprobe **R2** wurde anstelle von Erhärtungsbeschleunigern **KSTM A, KSTB B, KSTM C** gefälltes CaCO₃ mit einer Partikelgrösse (D50-Wert) von 595 nm eingesetzt. Die Mörtelproben weisen im Wesentlichen eine identische Verarbeitbarkeit auf.

Aus Fig. 2 wird klar, dass die Erhärtungsbeschleuniger im Vergleich mit den Referenzproben deutlich früher zu einem Temperaturanstieg in der Mörtelprobe führen und dass das Temperaturmaximum mit den erfindungsgemäss hergestellten Erhärtungsbeschleunigern früher erreicht wird. Je feiner die Partikel gemahlen werden, desto effektiver sind die Erhärtungsbeschleuniger bei gleicher Dosierung demnach.

Beachtenswert ist insbesondere, dass die Referenzprobe **R2** (D50-Wert = 595 nm) trotz geringerer Partikelgrösse klar weniger stark beschleunigt als der Erhärtungsbeschleuniger **KSTM A** (D50-Wert = 625 nm). Dies zeigt, dass die Erhärtungsbeschleuniger das Abbinden und Erhärten von Mörtelzusammensetzungen beschleunigen und dass das Verfahren einen entscheidenden Einfluss auf die Beschleunigungswirkung hat.

### 4.2 Druckfestigkeiten von Mörtelproben

In weiteren Versuchen wurden die Druckfestigkeiten von verschiedenen Mörtelproben mit unterschiedlichen Zementen und unterschiedlichen Fliessmittelkonzentrationen wie in Kapitel 2 beschrieben gemessen. Hierbei wurden in einem ersten Versuch herkömmliche Erhärtungsbeschleuniger **B1, B2** und **B3** (siehe Tabelle 1) mit dem Erhärtungsbeschleuniger vom Typ **KSTM C** verglichen. Die Resultate sind in Tabelle 1 zusammengefasst:

**Tabelle 1**

| **Zement** | **Dosierung Fliessmittel [Gew.-%] bezogen auf Zement** | **Zeit** | **Druckfestigkeit in MPa** | | | | |
|---|---|---|---|---|---|---|---|
| | | | **Ref** | **B1** | **B2** | **B3** | **KSTM C** |
| **CEM I 52.5 R** | 0.75 | **6h** | 2.6 | 4.4 | 3.9 | 4.1 | 6.0 |
| | | **8h** | 8.8 | 11.9 | 10.6 | 14.7 | 17.6 |
| | | **24h** | 44.3 | 48.2 | 48.7 | 44.1 | 46.5 |
| | 0.90 | **6h** | 1.8 | 3.9 | 3.9 | 3.7 | 4.9 |
| | | **8h** | 6.9 | 12.0 | 9.9 | 11.3 | 14.7 |
| | | **24h** | 41.8 | 43.0 | 37.6 | 43.1 | 43.4 |
| **CEM I 52.5 R-ft** | 0.45 | **6h** | 0.7 | 1.4 | 1.6 | 1.1 | 2.9 |
| | | **8h** | 2.0 | 2.0 | 4.0 | 1.1 | 9.8 |
| | 0.90 | **6h** | 0.6 | 1.1 | 1.5 | 1.2 | 2.8 |
| | | **8h** | 1.5 | 1.2 | 3.1 | 1.2 | 8.7 |
| **CEM I 42.5 R** | 0.70 | **6h** | 0.6 | 0.9 | 1.0 | 0.9 | 2.1 |
| | | **8h** | 1.8 | 4.6 | 2.9 | 3.7 | 6.6 |
| | | **24h** | 31.1 | 35.1 | 29.0 | 33.8 | 34.6 |
| | 0.80 | **6h** | n.d. | n.d. | n.d. | n.d. | n.d. |
| | | **8h** | n.d. | 1.3 | 1.5 | 1.4 | 3.2 |
| | | **24h** | 28.9 | 35.5 | 28.3 | 34.1 | 34.5 |

| | | | | | | | |
|---|---|---|---|---|---|---|---|
| n.d. = nicht bestimmt **Ref** = Nullprobe ohne Zusatz eines Erhärtungsbeschleunigers. **B1** = handelsüblicher Beschleuniger auf Basis von Ca(NO₃) und NaSCN. **B2** = handelsüblicher Beschleuniger basierend auf Ca(NO₃). **B3** = handelsüblicher Beschleuniger basierend auf Ca(NO₃) und einem Alkanolamin | | | | | | | |

Die Resultate zeigen, dass der Erthärtungsbeschleuniger **KSTM C** im Vergleich mit handelsüblichen Produkten unabhängig vom eingesetzten Zementtyp signifikante Druckfestigkeitssteigerungen ergeben. Dies insbesondere im Zeitraum zwischen 6 - 8 Stunden nach dem Anmachen der Mörtelmischungen.

In weiteren Versuchen wurden die Suspensionsbeschleuniger basierend auf Kalksteinmehl und Zement getestet.

Tabelle 2 zeigt Mörtelversuche mit den Beschleunigern **KCEM0**, **KCEM1** und **KCEM2.** Die Mörtelproben wurden wie oben in Kapitel 2 beschrieben hergestellt und gemäss den Angaben in Kapitel 3 getestet. Als Zement wurde der gleiche Zement vom Typ CEM I 52.5 R wie in den ersten Versuchen verwendet. **Ref.** bezeichnet einen Referenzversuch ohne Zugabe eines Beschleunigers.

**Tabelle 2 (alle Werte in MPa)**

| **Beschleuniger →** | **Ref.** | **KCEM0** | **KCEM1** | **KCEM2** |
|---|---|---|---|---|
| Druckfestigkeit nach 6h | 2.6 | 3.9 | 4.5 | 6.5 |
| Druckfestigkeit nach 8h | 8.8 | 12.3 | 13.4 | 17.8 |

Alle drei Suspensionsbeschleuniger **KCEM0**, **KCEM1** und **KCEM2** erhöhen sowohl die 6h-, als auch die 8h-Festigkeiten. Gegenüber der reinen Kalksteinmehlsuspension (**KCEM0**) werden die Festigkeiten mit den Beschleunigern **KCEM1** und **KCEM2,** welche zusätzlich suspendierten Zement enthalten, nochmals erhöht.

Um diese Ergebnisse zu verifizieren und um auszuschliessen, dass die höheren Festigkeiten auf den erhöhten Zementgehalt im Mörtelsystem zurückzuführen sind, wurden die in Tabelle 3 gezeigten Mörtelversuche mit den Suspensionen **KCEM0**, **KCEM1, KCEM2, KCEM3, 2K-KCEM-LL** und **2K-KCEM-LS** in Mörtelmischungen mit einem anderen Zement vom Typ CEM I durchgeführt. Die Suspensionen wurden stets mit einem Anteil von 5 Gew.-%, bezogen auf den Zementgehalt der Mörtelzusammensetzung. Beim Beschleuniger **2K-KCEM-LL** wurden die erste Komponente (Kalksteinmehl-Suspension) und die zweite Komponente (Zement-Suspension) zeitgleich in die Mörtelmischung gegeben. Beim Beschleuniger **2K-KCEM-LS** wurde der Zement als Pulver (= 2. Komponente) zeitgleich mit der der Kalksteinmehr-Suspension (1. Komponente) in die Mörtelmischung gegeben.

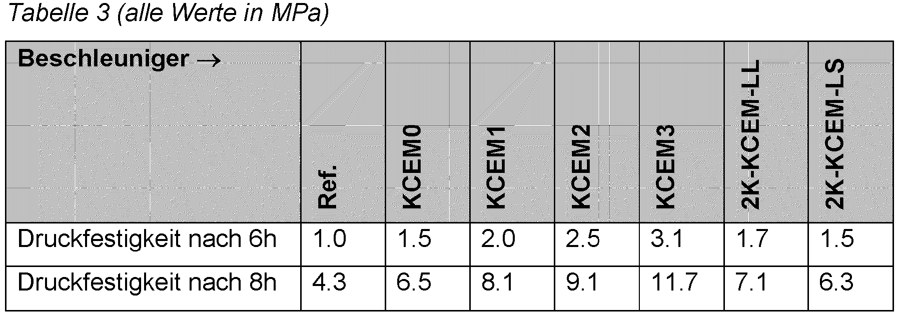

Die Ergebnisse bestätigen, dass die Beschleuniger bei Zugabe von geringen Mengen Zement zur Kalksteinmehlsuspension **(KCEM1, KCEM2, KCEM3)** höhere Frühfestigkeiten ergeben als reine Kalksteinmehlsuspensionen (**KCEM0**). Weiterhin konnte gezeigt werden, dass die zusätzliche Beschleunigung nicht allein durch die erhöhte Zementmenge im System **(2K-KCEM-LS)** bzw. durch vorhydratisierten Zement **(2K-KCEM-LL)** erzielt wird. Wenn der Zement zur feingemahlenen Kalksteinmehlsuspension gegeben wird und danach das gesamte Gemisch als Beschleuniger zu Mörtel-/Betonmischungen gegeben wird, wird eine zusätzliche Beschleunigung erreicht bzw. Zement und Kalksteinmehl wirken als Bestandteile in einer Suspension funktional zusammen.

Im Ergebnis ist festzuhalten, dass mit dem erfindungsgemässen Verfahren in einfacher Art und Weise effektive Abbinde- und/oder Erhärtungsbeschleuniger erhältlich sind, welche die Verarbeitbarkeit von mineralischen Bindemittelzusammensetzungen nicht wesentlich beeinträchtigen.

Die vorstehend beschriebenen Ausführungsformen sind jedoch lediglich als illustrative Beispiele zu verstehen, welche im Rahmen der Erfindung beliebig abgewandelt werden können.

So kann der Portlandzement beispielsweise teilweise durch ein latenthydraulisches und/oder puzzolanisches Bindemittel ersetzt werden.

Auch können zusätzlich oder anstelle der beschriebenen Aggregate (Sande, Kalksteinfüller) grössere Aggregate verwendet werden, um z.B. eine Betonzusammensetzung zu erhalten. Ebenso können weitere Zusatzmittel, z.B. erhärtungsbeschleunigende Substanzen verwendet werden.

## Patentansprüche

1. Verfahren zur Herstellung eines Abbinde- und/oder Erhärtungsbeschleunigers für mineralische Bindemittel, **dadurch gekennzeichnet, dass** ein mineralischer Feststoff in einem flüssigen Medium einer Mahlung unterzogen wird, wobei der mineralische Feststoff einen Zement, insbesondere einen Portlandzement, Calciumaluminatzement und/oder Calciumsulfoaluminatzement, umfasst und wobei der mineralische Feststoff Kalkstein und/oder Kalksteinmehl, umfasst.

2. Verfahren nach Anspruch 1, wobei der mineralische Feststoff vor der Mahlung in Form eines Mehls vorliegt und/oder wobei der mineralische Feststoff eine durchschnittliche Partikelgrösse von 0.0001 bis 1.0 mm, bevorzugt 0.001 bis 0.5 mm, insbesondere 0.002 bis 0.063 mm aufweist.

3. Verfahren nach wenigstens einem der vorangehenden Ansprüche, wobei das flüssige Medium Wasser und/oder Alkohol enthält oder daraus besteht, insbesondere Wasser.

4. Verfahren nach wenigstens einem der vorangehenden Ansprüche, wobei das mineralische Bindemittel während der Mahlung durch das flüssige Medium zumindest teilweise, insbesondere vollständig hydratisiert wird.

5. Verfahren nach wenigstens einem der vorangehenden Ansprüche, wobei der mineralische Feststoff zu Partikeln mit einer durchschnittlichen Partikelgrösse < 600 nm, insbesondere < 300 nm, bevorzugt < 200 nm, im Besonderen < 100 nm, im ganz Besonderen < 60 nm, im Speziellen < 25 nm, vermahlen wird.

6. Verfahren nach wenigstens einem der vorangehenden Ansprüche, wobei der mineralische Feststoff im flüssigen Medium einen Anteil von 5 - 95 Gew.-%, insbesondere 10 - 85 Gew.-%, bevorzugt, 15 - 70 Gew.-%, im Speziellen 20 - 60 Gew.-%, bezogen auf das Gesamtgewicht des flüssigen Mediums und des mineralischen Feststoffs, aufweist.

7. Verfahren zur Beschleunigung des Abbindens und/oder Erhärtens eines mineralischen Bindemittels, insbesondere eines hydraulischen Bindemittels eines latent-hydraulischen Bindemittels und/oder eines puzzolanischen Bindemittels, umfassend wenigstens die folgenden Schritte:
a) Herstellung eines Abbinde- und/oder Erhärtungsbeschleunigers gemäss einem Verfahren nach wenigstens einem der vorangehenden Ansprüche
b) Zugabe des in Schritt a) erhaltenen Abbinde- und/oder Erhärtungsbeschleunigers zum zu beschleunigenden mineralischen Bindemittel.

8. Verfahren nach Anspruch 7, wobei der in Schritt a) bei der Mahlung eingesetzte mineralische Feststoff das in Schritt b) verwendete und zu beschleunigende mineralische Bindemittel umfasst oder daraus besteht.

9. Abbinde- und/oder Erhärtungsbeschleuniger erhältlich durch ein Verfahren nach einem der Ansprüche 1 - 6, wobei der Abbinde- und/oder Erhärtungsbeschleuniger als Suspension, insbesondere als wässrige Suspension, vorliegt und folgende Bestandteile beinhaltet:
a) Einen dispergierten inerten mineralischen Feststoff, ausgewählt aus der Gruppe bestehend aus Kalkstein, Kalksteinmehl, oder Mischungen davon;
b) Ein dispergiertes mineralisches Bindemittel, insbesondere ein hydraulisches Bindemittel, ein latent hydraulisches Bindemittel, ein puzzolanisches Bindemittel und/oder ein nicht hydraulisches Bindemittel;
wobei sowohl der inerte mineralische Feststoff als auch das mineralische Bindemittel in dispergierter Form oder in Form von suspendierten Partikeln vorliegen,
und wobei der Abbinde- und/oder Erhärtungsbeschleuniger 90 - 99.9 Gew-%, insbesondere 95 - 99 Gew.-%, des inerten mineralischen Feststoffs, insbesondere Kalkstein und/oder Kalksteinmehl, und 0.1 - 10 Gew.-%, im Besonderen 1 - 5 Gew.-%, des mineralisches Bindemittels, insbesondere Zement, jeweils bezogen auf den Feststoffgehalt des Abbinde- und/oder Erhärtungsbeschleuniger, umfasst.

10. Abbinde- und/oder Erhärtungsbeschleuniger nach Anspruch 9 wobei ein Anteil an Flüssigkeit im Abbinde- und/oder Erhärtungsbeschleuniger, insbesondere Wasser, 40 - 85 Gew.-%, bezogen auf das Gesamtgewicht des Erhärtungsbeschleunigers, beträgt.

11. Verwendung eines Abbinde- und/oder Erhärtungsbeschleunigers nach wenigstens einem der Ansprüche 9 - 10 zur Beschleunigung des Abbindens und/oder Erhärtens eines mineralischen Bindemittels und/oder von mineralischen Bindemittelzusammensetzungen, insbesondere einer zementösen Bindemittelzusammensetzung, bevorzugt einer Mörtel- und/oder Betonzusammensetzung.

## Claims

1. Process for producing a setting and/or hardening accelerator for mineral binders, **characterized in that** a mineral solid is subjected to milling in a liquid medium, wherein the mineral solid comprises a cement, in particular a Portland cement, calcium aluminate cement and/or calcium sulfoaluminate cement, and wherein the mineral solid comprises limestone and/or limestone flour.

2. Process according to Claim 1, wherein the mineral solid is in the form of a flour before milling and/or wherein the mineral solid has an average particle size of 0.0001 to 1.0 mm, preferably 0.001 to 0.5 mm, in particular 0.002 to 0.063 mm.

3. Process according to at least one of the preceding claims, wherein the liquid medium contains or consists of water and/or alcohol, in particular water.

4. Process according to at least one of the preceding claims, wherein the mineral binder is at least partially, in particular completely, hydrated by the liquid medium during milling.

5. Process according to at least one of the preceding claims, wherein the mineral solid is milled to particles having an average particle size < 600 nm, in particular < 300 nm, preferably < 200 nm, in particular < 100 nm, very particularly < 60 nm, especially < 25 nm.

6. Process according to at least one of the preceding claims, wherein the mineral solid has a proportion of 5-95% by weight, in particular 10-85% by weight, preferably 15-70% by weight, especially 20-60% by weight, in the liquid medium, based on the total weight of the liquid medium and the mineral solid.

7. Method for accelerating the setting and/or hardening of a mineral binder, in particular a hydraulic binder, a latent hydraulic binder and/or a pozzolanic binder, comprising at least the following steps:
a) production of a setting and/or hardening accelerator by a process according to at least one of the preceding claims
b) addition of the setting and/or hardening accelerator obtained in step a) to the mineral binder to be accelerated.

8. Method according to Claim 7, wherein the mineral solid used in step a) in the milling comprises or consists of the mineral binder which is used in step b) and which is to be accelerated.

9. Setting and/or hardening accelerator obtainable by a process according to one of Claims 1-6, wherein the setting and/or hardening accelerator is present as a suspension, in particular as an aqueous suspension, and comprises the following constituents:
a) a dispersed inert mineral solid selected from the group consisting of limestone, limestone flour or mixtures thereof;
b) a dispersed mineral binder, in particular a hydraulic binder, a latent hydraulic binder, a pozzolanic binder and/or a non-hydraulic binder;
wherein both the inert mineral solid and the mineral binder are present in dispersed form or in the form of suspended particles,
and wherein the setting and/or hardening accelerator comprises 90-99.9% by weight, in particular 95-99% by weight, of the inert mineral solid, in particular limestone and/or limestone flour, and 0.1-10% by weight, in particular 1-5% by weight, of the mineral binder, in particular cement, in each case based on the solid content of the setting and/or hardening accelerator.

10. Setting and/or hardening accelerator according to Claim 9, wherein a proportion of liquid in the setting and/or hardening accelerator, in particular water, is 40-85% by weight, based on the total weight of the hardening accelerator.

11. Use of a setting and/or hardening accelerator according to at least one of Claims 9-10 for accelerating the setting and/or hardening of a mineral binder and/or of mineral binder compositions, in particular a cementitious binder composition, preferably a mortar and/or concrete composition.

## Revendications

1. Procédé de préparation d'un accélérateur de prise et/ou de durcissement pour liants minéraux, **caractérisé en ce qu'**une matière solide minérale est soumise à un broyage dans un milieu liquide, la matière solide minérale comprenant un ciment, en particulier un ciment Portland, ciment d'aluminates de calcium et/ou ciment de sulfoaluminate de calcium, la matière solide minérale comprenant du calcaire ou de la poudre de calcaire

2. Procédé selon la revendication 1, dans lequel avant le broyage la matière solide minérale se trouve sous forme d'une poudre et/ou dans lequel la matière solide minérale présente une taille moyenne de particule de 0,0001 à 1,0 mm, de préférence 0,001 à 0,5 mm, en particulier 0,002 à 0,063 mm.

3. Procédé selon au moins l'une quelconque des revendications précédentes, dans lequel le milieu liquide contient ou consiste en de l'eau et/ou de l'alcool, en particulier de l'eau.

4. Procédé selon au moins l'une quelconque des revendications précédentes, dans lequel pendant le broyage le liant minéral est au moins partiellement, en particulier totalement hydraté par le milieu liquide.

5. Procédé selon au moins l'une quelconque des revendications précédentes, dans lequel la matière solide minérale est broyée en particules ayant une taille moyenne de particule < 600 nm, en particulier < 300 nm, de préférence < 200 nm, plus particulièrement < 100 nm, tout particulièrement < 60 nm, le plus particulièrement < 25 nm.

6. Procédé selon au moins l'une quelconque des revendications précédentes, dans lequel la matière solide minérale présente dans le milieu liquide une proportion de 5-95 % en poids, en particulier 10-85 % en poids, de préférence 15-70 % en poids, plus particulièrement 20-60 % en poids, par rapport au poids total du milieu liquide et de la matière solide minérale.

7. Procédé d'accélération de la prise et/ou du durcissement d'un liant minéral, en particulier d'un liant hydraulique et/ou d'un liant pouzzolanique, comprenant au moins les étapes suivantes:
a) préparation d'un accélérateur de prise et/ou de durcissement conformément à un procédé selon au moins l'une quelconque des revendications précédentes
b) addition de l'accélérateur de prise et/ou de durcissement obtenu dans l'étape a), pour l'obtention du liant minéral à accélérer.

8. Procédé selon la revendication 7, dans lequel la matière solide minérale utilisée lors du broyage dans l'étape a) comprend ou consiste en le liant minéral à accélérer et utilisé dans l'étape b).

9. Accélérateur de prise et/ou de durcissement pouvant être obtenu par un procédé selon l'une quelconque des revendications 1-6, l'accélérateur de prise et/ou de durcissement se trouvant sous forme de suspension, en particulier sous forme de suspension aqueuse, et comprenant les constituants suivants :
a) une matière solide minérale inerte dispersée, choisie dans le groupe constitué par le calcaire, la poudre de calcaire, ou des mélanges de telles matières ;
b) un liant minéral dispersé, en particulier un liant hydraulique, un liant hydraulique latent, un liant pouzzolanique et/ou un liant non hydraulique ;
dans lequel aussi bien la matière solide minérale inerte que le liant minéral se trouvent sous forme dispersée ou sous forme de particules en suspension,
et dans lequel l'accélérateur de prise et/ou de durcissement comprend 90-99,9 % en poids, en particulier 95-99 % en poids, de la matière solide minérale, en particulier de calcaire et/ou de poudre de calcaire, et 0,1-10 % en poids, en particulier 1-5 % en poids, du liant minéral, en particulier de ciment, chaque fois par rapport à la teneur en matière solide de l'accélérateur de prise et/ou de durcissement.

10. accélérateur de prise et/ou de durcissement selon la revendication 9, dans lequel une proportion de liquide dans l'accélérateur de prise et/ou de durcissement, en particulier d'eau, vaut 40-85 % en poids, par rapport au poids total de l'accélérateur de durcissement.

11. Utilisation d'un accélérateur de prise et/ou de durcissement selon au moins l'une quelconque des revendications 9-10 pour l'accélération de la prise et/ou du durcissement d'un liant minéral et/ou de compositions de liants minéraux, en particulier d'une composition de liant cimentaire, de préférence d'une compositions de mortier et/ou de béton.
